# EUROPEAN PATENT SPECIFICATION

(11) **EP 1 614 613 B1**
(45) Date of publication and mention of the grant of the patent: **16.07.2008**
(21) Application number: 05014805.5
(22) Date of filing: 07.07.2005
(51) Int. Cl.: B62K 11/00, B62K 25/28, F01N 7/08

(54) **Saddle type vehicle**
Fahrzeug mit Sattel
Véhicule du type à selle

(30) Priority: 07.07.2004 JP 2004200995; 07.07.2004 JP 2004200994; 27.05.2005 JP 2005156258
(43) Date of publication of application: 11.01.2006
(73) Proprietor: Yamaha Hatsudoki Kabushiki Kaisha, Iwata-shi, Shizuoka-ken (JP)
(72) Inventor: Matsui, Hiroaki, Iwata-shi, Shizuoka-ken (JP)
(74) Representative: Grünecker, Kinkeldey, Stockmair & Schwanhäusser Anwaltssozietät

(56) References cited:
- EP-A- 1 577 208
- US-A- 5 839 536
- PATENT ABSTRACTS OF JAPAN vol. 1997, no. 08, 29 August 1997 (1997-08-29) & JP 09 096217 A (HONDA MOTOR CO LTD), 8 April 1997 (1997-04-08)

## Description

The present invention relates to a saddle type vehicle and, in particular to a saddle type vehicle having a body frame, an engine attached to the body frame, an exhaust pipe extending backward from the engine, and a rear arm swingable about a pivot shaft attached to the body frame.

A saddle type vehicle, having: an engine; an exhaust pipe extending below the engine in the longitudinal direction of the vehicle; a cushion unit for absorbing vibration from a rear wheel; and a rear arm swingable about a pivot shaft, is widely known. More specifically, in a saddle type vehicle according to JP-A-Hei 9-96217, the exhaust pipe extends upward in the vicinity of the pivot shaft, and the cushion unit is disposed above the pivot shaft and behind the engine and has a vertically elongated shape.

In a conventional saddle type vehicle, the cushion unit is disposed above the pivot shaft and extends vertically along the exhaust pipe extending upward in the vicinity of the pivot shaft. Thus, the exhaust pipe and the cushion unit must be disposed in a narrow space in the vicinity of the pivot shaft, and the layout of the exhaust pipe and the cushion unit is restricted.

From EP 1 577 208 A2 (date of publication: 21.09.2005) there is known that the exhaust pipe of the front cylinder and the exhaust pipe of the rear cylinder are formed to extend downward from the engine and are joined with each other at a joining pipe behind the crankcase, wherein this joining pipe extends upwards and passes between left and right connection arms of the rear arm. Further, the connection arms are attached to a pivot shaft at a pivot point, being part of the rear main frame. Therein, the rear down tube half of the down tube is formed with cushion unit connection brackets and rear arm bracket connection brackets, wherein the rear arm bracket connection brackets are provided in the vertical direction above the cushion unit connection brackets.

The present invention has been made to solve the above problem and it is, therefore, an object of the present invention to provide a saddle type vehicle in which the exhaust pipe and the cushion unit can be laid out easily even when the exhaust pipe extends upward behind the pivot shaft.

This objective is solved by the saddle type vehicle defined in claim 1, comprising a body frame, an engine mounted on the body frame, an exhaust pipe extending backward from the engine, a rear arm swingable about a pivot shaft attached to the body frame, a rear wheel supported by a rear part of the rear arm, and a cushion unit connecting the body frame and the rear arm, wherein the exhaust pipe has an upright portion extending upward from below the pivot shaft, and wherein the cushion unit is located below the pivot shaft and has a longitudinally elongated shape, wherein the rear arm is provided with an arm head space, and wherein the upright portion is located in one side part of the arm head space, which is a part of the arm head space on the outside in the vehicle width direction, and the cushion unit is located below the other side part of the arm head space, which is a part of the arm head space on the outside in the vehicle width direction.

With this saddle type vehicle, there is provided a saddle type vehicle in which the influence of heat from the exhaust pipe on the cushion unit is reduced.

According to a preferred embodiment, there are provided a front exhaust pipe connected to a front exhaust port of the engine, and a rear exhaust pipe connected to a rear exhaust port, said front and rear exhaust pipes being joined to form a collection exhaust pipe having the upright portion.

According to a further preferred embodiment, the rear arm has a pair of right and left rear arm bodies and a cross member connecting the paired right and left rear arm bodies, the paired right and left rear arm bodies having a pair of right and left arm head parts located in front of the cross member, said paired right and left arm head parts, said cross member and said pivot shaft defining an arm head space. Therein, it is preferred if the upright portion extends upward through the arm head space defined by the paired right and left arm head parts, the cross member and the pivot shaft, and in that the cushion unit is disposed below the arm head space. Moreover, it is preferred if the cushion unit has a sub-tank for storing high-pressure gas for pressurizing operation oil, wherein the sub-tank is located in the arm head space when the saddle type vehicle is stationary. Therein, it is preferable if the sub-tank is inclined backward from bottom to top when the saddle type vehicle is stationary.

According to another preferred embodiment, the upright portion is located in one side part of the arm head space, which is a part of the arm head space on the outside in the vehicle width direction, in that the cushion unit is located below the other side part of the arm head space, which is a part of the arm head space on the outside in the vehicle width direction, and in that part of the exhaust pipe on the engine side from the upright portion is aligned with the cushion unit. Therein, it is preferable if the upright portion is located on the front side in the one side part of the arm head space when the saddle type vehicle is stationary, and in that the sub-tank is located on the rear side in the other side part of the arm head space when the saddle type vehicle is stationary.

According to yet another preferred embodiment, a catalyst is disposed in the upright portion.

According to still another preferred embodiment, there are provided a relay arm connecting a rear part of the cushion unit and the rear arm, and an intermediate arm connecting the body frame and the relay arm at a position below the cushion unit, the intermediate arm having a pair of right and left arm parts covering at least a part of the cushion unit from outside in the vehicle width direction, and having a connecting part connecting the paired right and left arm parts and covering the cushion unit from below. Therein, it is preferable if the upright portion is located in one side part of the arm head space, which is a part of the arm head space on the outside in the vehicle width direction, and in that the cushion unit and the intermediate arm are located below the other side part of the arm head space, which is a part of the arm head space on the outside in the vehicle width direction. Moreover, it is further preferable if the intermediate arm has a connecting boss part connecting the body frame and the relay arm, wherein the connecting boss part is located inside an outer end of the intermediate arm in the vehicle width direction.

According to a further particular preferred embodiment, the rear arm has a pair of right and left rear arm bodies, the paired left and right rear arm bodies having a pair of right and left arm head parts having rear arm side shaft supporting parts for receiving the pivot shaft, in that the body frame has a pair of right and left rear arm supporting parts for supporting the engine disposed between the paired right and left arm head parts, the paired right and left rear arm supporting parts having body frame side shaft supporting parts for receiving the pivot shaft, and if the pivot shaft extends through the rear arm side shaft supporting parts and the frame side shaft supporting parts and is fastened from outside of the rear arm side shaft supporting parts in the vehicle width direction by a fastening member. Therein, it is preferable if the rear arm has a cross member connecting the paired right and left rear arm bodies, and if the upright portion is located in an arm head space defined by the paired right and left rear arm supporting parts, the paired right and left arm head parts, the cross member and the pivot shaft when the saddle type vehicle is stationary.

In the following, the present invention is explained in greater detail with respect to several embodiments thereof in conjunction with the accompanying drawings, wherein:
- Fig. 1: is a side view of a motorcycle 1 according to one embodiment;
- Fig. 2: is a plan view of a motorcycle 1 according to one embodiment;
- Fig. 3: is a left side view of a pivot shaft 12 of a rear arm 8 according to one embodiment;
- Fig. 4: is a cross-sectional view of the pivot shaft 12 of the rear arm 8 according to one embodiment;
- Fig. 5: is a right side view of an exhaust device 22 according to one embodiment;
- Fig. 6: is a plan view of a rear wheel suspension device 16 according to one embodiment;
- Fig. 7: is a left side view of the rear wheel suspension device 16 according to one embodiment;
- Fig. 8: is a cross-sectional view of a cushion unit 30 of the rear wheel suspension device 16 according to one embodiment;
- Fig. 9: is a plan view of an intermediate arm 32 of the rear wheel suspension device 16 according to one embodiment; and
- Fig. 10: is a left side view of the intermediate arm 32 of the rear wheel suspension device 16 according to one embodiment.

### (Constitution of a saddle type vehicle according to one embodiment)

Description will be hereinafter made of an embodiment of a saddle type vehicle with reference to the drawings. Corresponding or similar components are denoted in all the drawings by the same or similar numerals. It should be noted that the drawings are schematic and the proportions of the dimensions and so on differ from those in reality.

Thus, the actual dimensions and so on should be understood in view of the following description. It should be also noted that a relationship or proportion of dimensions may be different between the drawings.

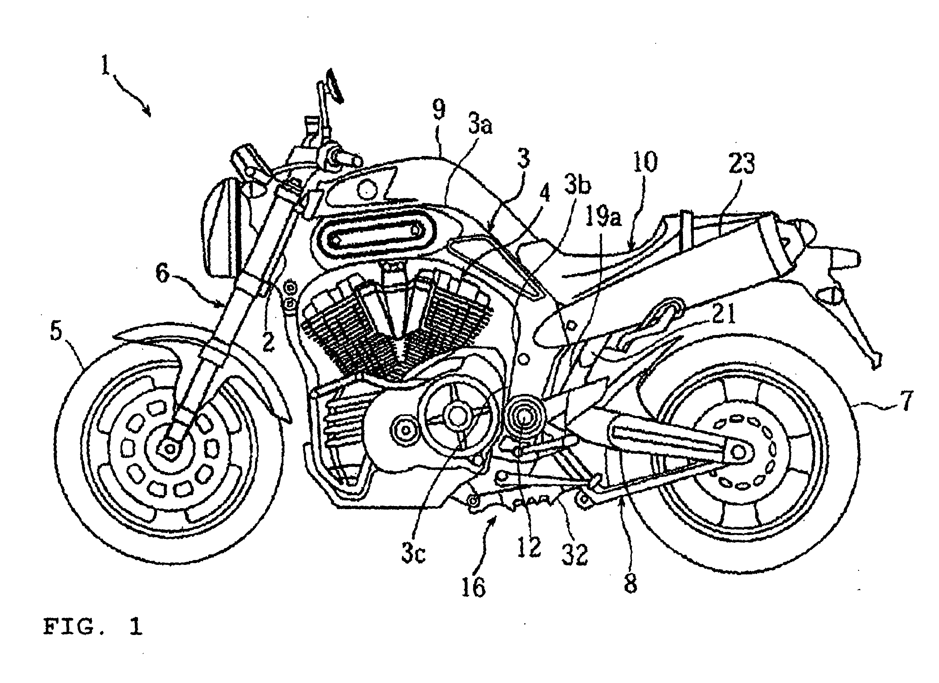

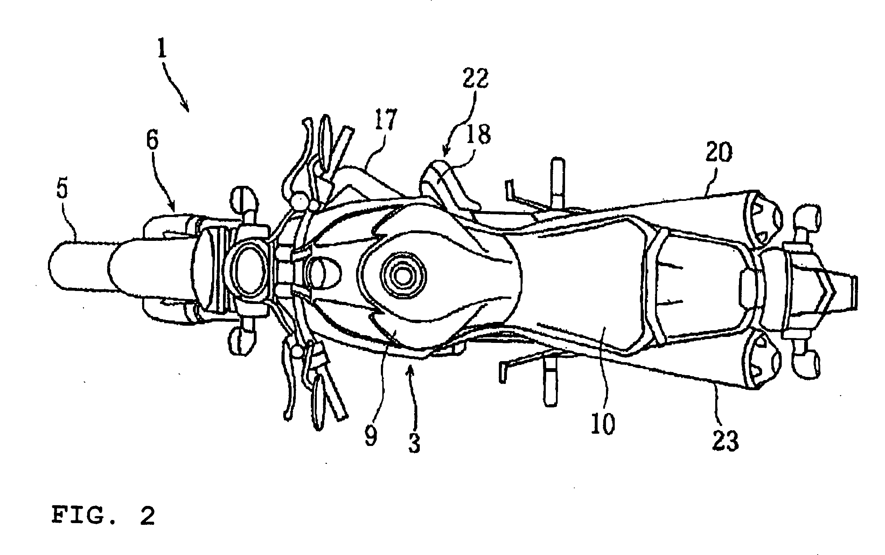

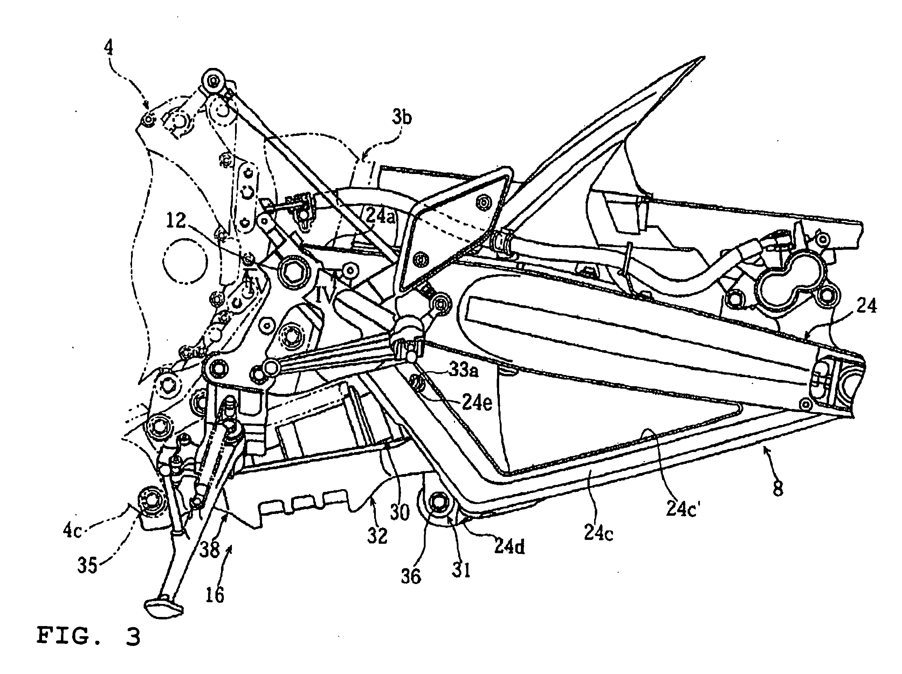

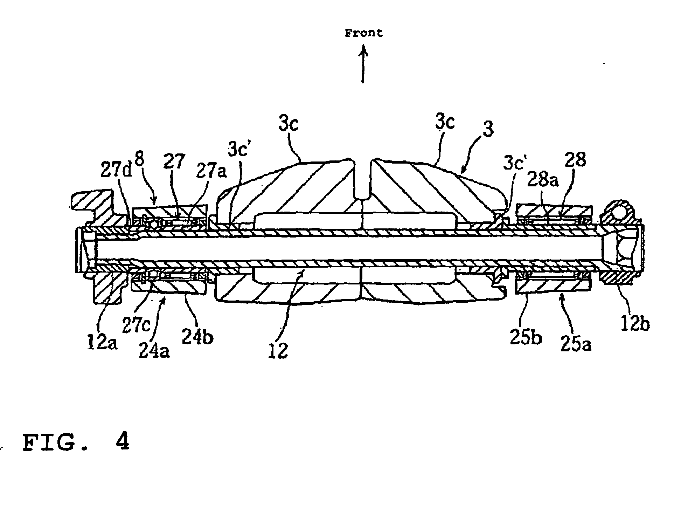

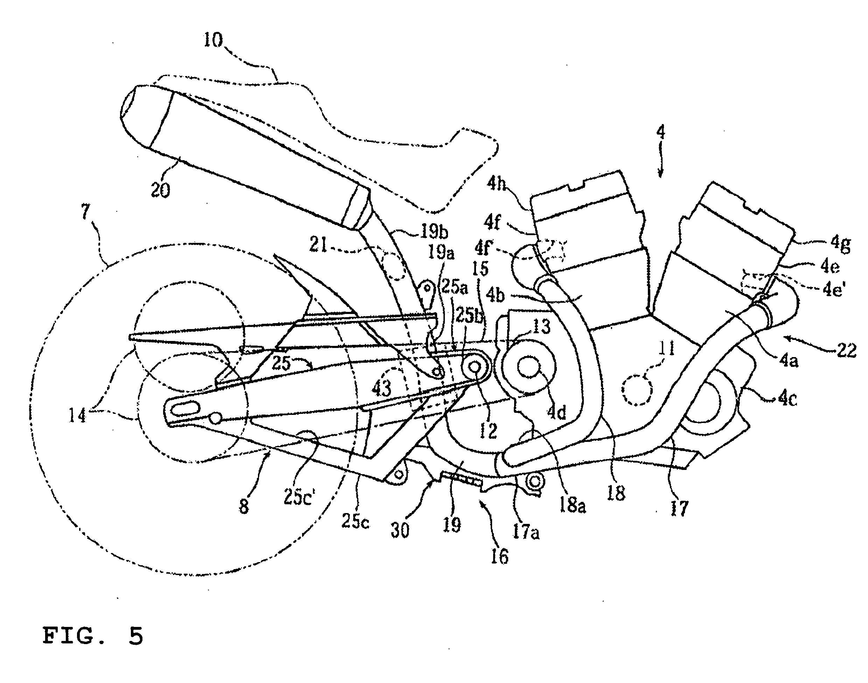

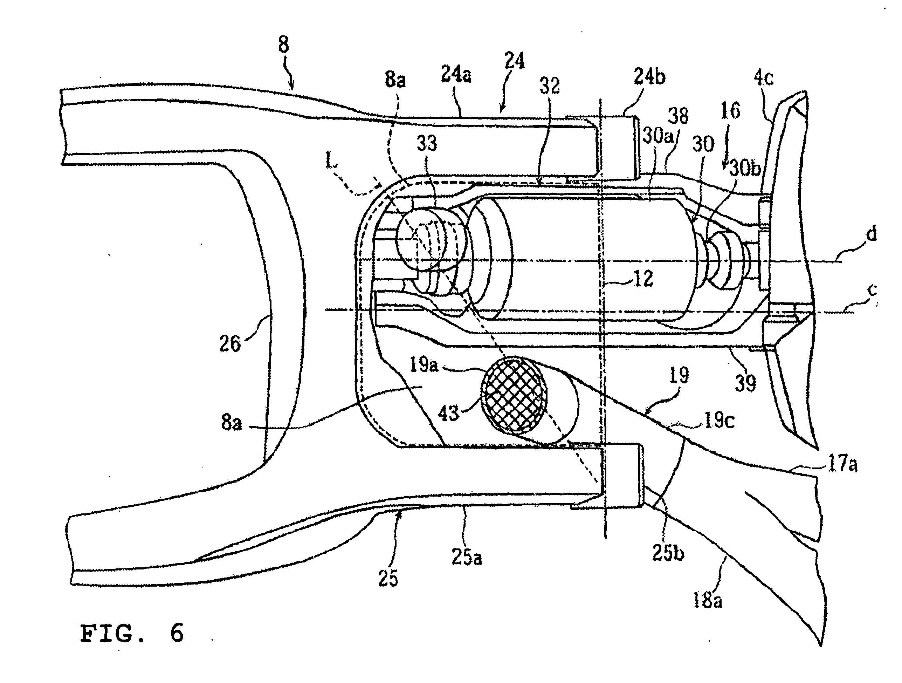

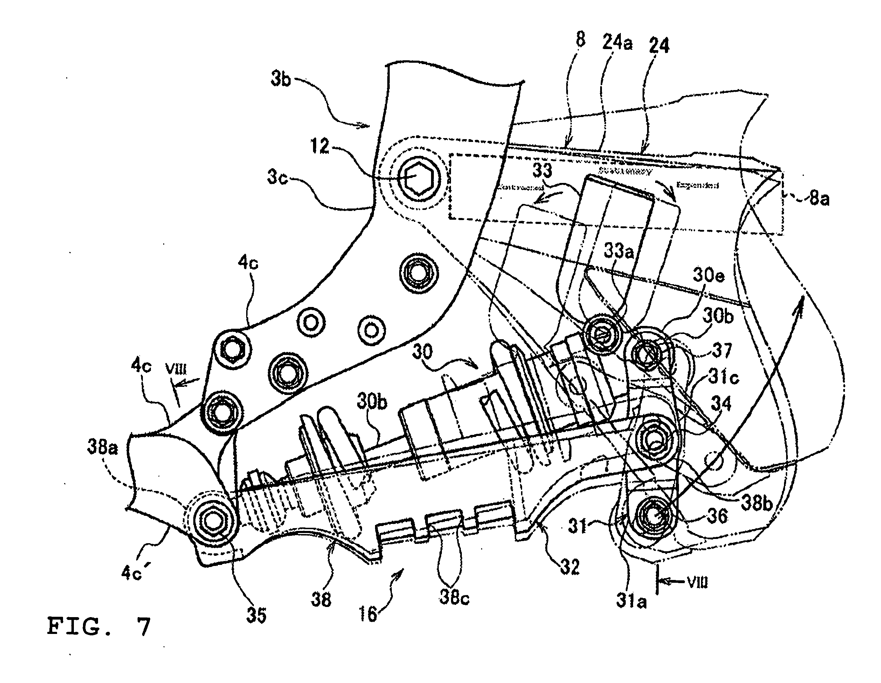

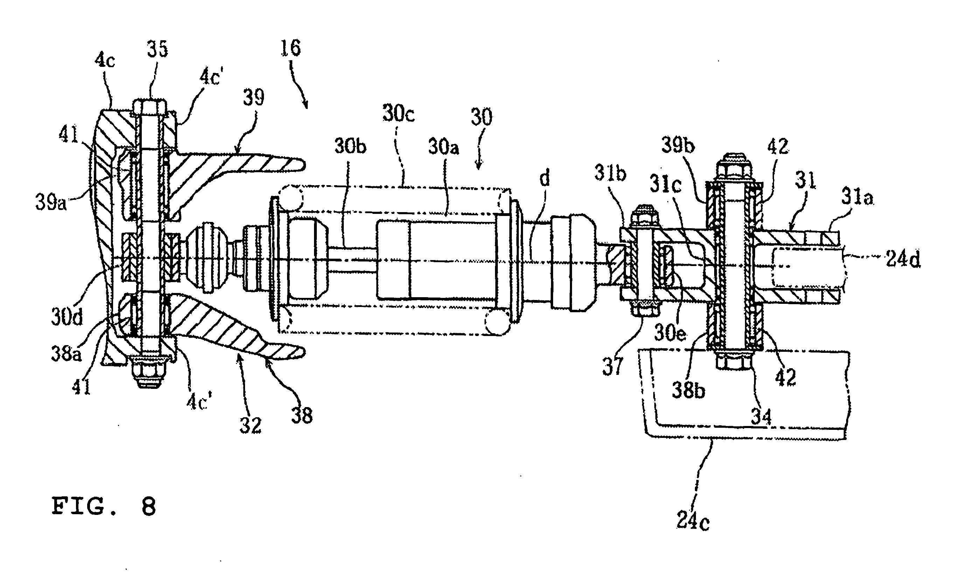

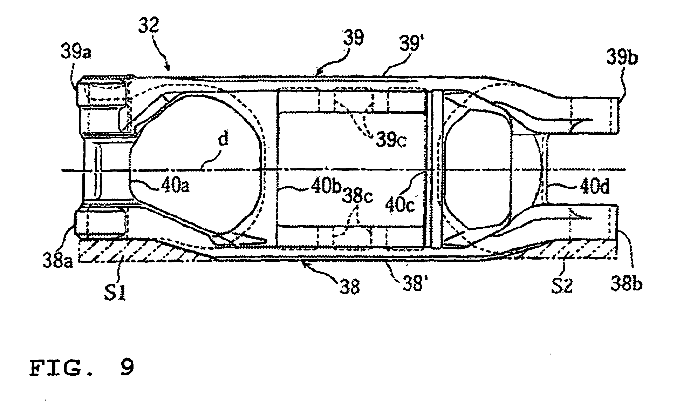

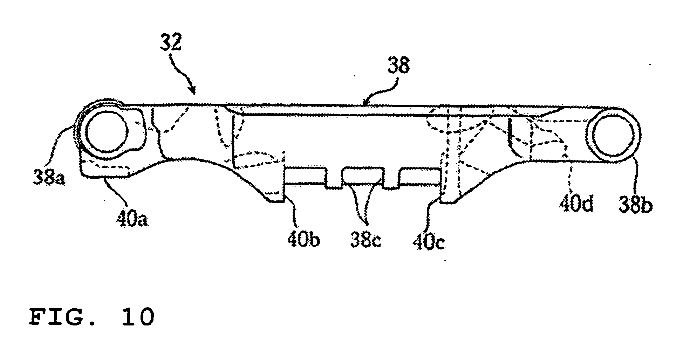

Fig. 1 to Fig. 10 are views for explaining a motorcycle as a saddle type vehicle according to one embodiment. Fig. 1 and Fig. 2 are a side view and a plan view, respectively, of a motorcycle 1. Fig. 3 is a left side view of the part of the motorcycle 1 around a rear arm 8. Fig. 4 is a cross-sectional view of a pivot shaft 12 of the rear arm 8 (cross-sectional view taken along the line IV-IV in Fig. 3). Fig. 5 is a right side view of an exhaust device 22. Fig. 6 and Fig. 7 are a plan view and a left side view, respectively, of a rear wheel suspension device 16. Fig. 8 is a cross-sectional view of a cushion unit 30 of the rear wheel suspension device 16 (cross-sectional view taken along the line VIII-VIII in Fig. 7). Fig. 9 and Fig. 10 are a plan view and a left side view, respectively, of an intermediate arm 32 of the rear wheel suspension device 16. In this embodiment, the terms "front," "rear," "right," and "left" mean front, rear, right and left as viewed by a rider sitting on the seat.

As shown in the drawings, the motorcycle 1 has the following configuration. More specifically, an engine 4 is mounted in a body frame 3 extending backward from a head pipe 2, and a front fork 6 for supporting a front wheel 5 is supported by the head pipe 2 for lateral rotation. A rear arm 8 for supporting a rear wheel 7 is supported by a rear arm bracket part 3b of the body frame 3 via a pivot shaft 12 for vertical swinging movement, and a rear wheel suspension device 16 is interposed between the rear arm 8 and the body frame 3 (a unit case 4c of the engine 4). A fuel tank 9 and a seat 10 are provided on the body frame 3, and an exhaust device 22 extending backward is connected to the engine 4.

The body frame 3 has a pair of right and left frame members produced by die casting, which are assembled by bolts. The paired right and left frame members are constituted of a pair of right and left main frame parts 3a extending backward and outward in the vehicle width direction from the head pipe 2 and then extending obliquely downward and inward in the vehicle width direction, and a pair of right and left rear arm bracket parts 3b extending generally vertically from the rear ends of the paired right and left main frame parts 3a. The main frame parts 3a and the rear arm bracket parts 3b are integrally formed.

The front ends of the paired right and left main frame parts 3a are located on both sides of the head pipe 2 and secured to the head pipe 2 by bolts. The lower ends of the paired rear arm bracket parts 3b are in contact with each other at a point at the center in the vehicle width direction and form rear arm supporting parts 3c. The front end of a seat rail (not shown) extending obliquely upward is joined to the rear ends of the paired main frame parts 3a. The engine 4, which is located across the paired right and left main frame parts 3a and the lower ends of the paired right and left rear arm bracket parts 3b and secured by bolts, forms a part of the body frame 3 to reinforce it.

The engine 4 has a unit case 4c formed by integrating a crankcase (not shown) housing a crankshaft 11 and a transmission case (not shown) housing a transmission mechanism, and a front and rear cylinder bodies 4a and 4b constituting a V-bank on the unit case 4c. The engine 4, which is an air-cooled, four-stroke, V-type two-cylinder engine, has cylinder heads 4e and 4f mounted on and joined to the front and rear cylinder bodies 4a and 4b, respectively, and head covers 4g and 4h attached to the cylinder heads 4e and 4f, respectively. An air intake device (not shown) is located inside the V-bank formed by the front and rear cylinder bodies 4a and 4b, the cylinder heads 4e and 4f, and the head covers 4g and 4h, and the before-mentioned exhaust device 22 is connected to the outer sides of the V-bank.

An output shaft 4d is protruded from the right side wall of the unit case 4c, and a driving sprocket 13 is attached to the output shaft 4d. A driven sprocket 14 is attached to the rear wheel 7. A driving chain 15 is trained over the driving sprocket 13 and the driven sprocket 14.

The exhaust device 22 has the following configuration as shown mainly in Fig. 2 and Fig. 5. The cylinder head 4e has a front exhaust port 4e', to which a front exhaust pipe 17 is connected, and the cylinder head 4f has a rear exhaust port 4f, to which a rear exhaust pipe 18 is connected. The front exhaust pipe 17 extends from the front exhaust port 4e'to the right side of the body frame 3 and extends obliquely backward to the rear right side of the engine 4. The rear exhaust pipe 18 extends from the cylinder head 4f to the right side of the body frame 3, curves slightly forward and then extends backward. The front and rear exhaust pipes 17 and 18 are joined together at their downstream ends 17a and 18a and connected to each other in such a manner that the downstream ends 17a and 18a are communicated to each other.

A collection exhaust pipe 19 is connected to the junction of the downstream ends 17a and 18a. The collection exhaust pipe 19 has an upright portion 19a extending inward in the vehicle width direction and obliquely backward from the junction of the downstream ends 17a and 18a and then extending upward.

The upright portion 19a has a downstream end part 19b extending toward the lower right part of the seat 10 and connected to and communicated with a right muffler 20 extending obliquely upward along the lower right edge of the seat 10. A branch pipe 21 is connected to and communicated with the downstream end part 19b of the upright portion 19a. The branch pipe 21 extends in the vehicle width direction below a front part of the seat 10 and is connected to and communicated with a left muffler 23 extending obliquely upward along the lower right edge of the seat 10.

The rear arm 8 has a shape of a rectangular cylinder with a rectangular cross-section. The rear arm 8 has a pair of right and left rear arm bodies (rear arm bodies 24 and 25) extending from the rear arm supporting parts 3c to a rear wheel supporting part thereof and a cross member 26 connecting the rear arm bodies 24 and 25 at a position in front of the rear wheel 7. The rear wheel 7 is located at the rear part of the rear arm bodies 24 and 25. The rear arm bodies 24 and 25 have a pair of right and left arm head parts (arm head parts 24a and 25a) located in front of the cross member 26. Pivot parts (pivot parts 24b and 25b) having a circular cylindrical shape are formed at the front ends of the arm head parts 24a and 25a. The pivot shaft 12 extends through the pivot parts 24b and 25b.

The arm head parts 24a and 25a, the cross member 26 and the pivot shaft 12 (by extension, the rear arm supporting parts 3c) define an arm head part space 8a.

Reinforcing parts (reinforcing parts 24c and 25c) curved downward are formed integrally with the lower sides of the arm head parts 24a and 25a, respectively. The arm head parts 24a and 25a have an inverted triangle shape as seen from a side and have openings (openings 24c' and 25c') having an inverted triangle shape.

The arm head parts 24a and 25a are located on the outside of the paired right and left rear arm supporting parts 3c of the body frame 3 in the vehicle width direction as shown in Fig. 4. The paired right and left rear arm supporting parts 3c are joined and fixed by the pivot shaft 12 extending through the pivot parts 24b and 25b. More specifically, by rotating a nut 12a attached to the left side end of the pivot shaft 12, the paired right and left rear arm supporting parts 3c are clamped between a shaft head 12b of the pivot shaft 12 and the nut 12a. That is, the paired right and left rear arm supporting parts 3c tightly clamp inner collars (inner collars 27a and 28a) of needle bearings (needle bearings 27 and 28), a ball bearing 27c, a collar 27d disposed in the pivot parts 24b and 25b and a pair of bushes (bushes 3c') attached to the rear arm supporting parts 3c from outside in the vehicle width direction.

The rear wheel suspension device 16 has a cushion unit 30 connected to the unit case 4c of the engine 4, a relay arm 31 connecting the rear end of the cushion unit 30 and the rear arm 8, and an intermediate arm 32 connecting an intermediate portion 31 c of the relay arm 31 and the unit case 4c as shown mainly in Fig. 7 and Fig. 8. The front end of the cushion unit 30 is connected to the unit case 4c.

The cushion unit 30 has a piston (not shown) slidably received in a cylinder 30a filled with operation oil, a piston rod 30b connected to the piston, and a coil spring 30c interposed between the piston rod 30b and the cylinder 30a.

A sub-tank 33 having a vertically elongated shape is located at the rear end of the cylinder 30a, and the cylinder 30a and the sub-tank 33 are connected to and communicated with each other. The sub-tank 33 is filled with high-pressure nitrogen gas or the like for pressurizing the operation oil filled in the cylinder 30a. A damping force adjusting valve 33a is provided at the part where the cylinder 30a and the sub-tank 33 are connected to and communicated with each other.

A pair of right and left supporting parts 4c' extending backward are formed integrally with the lower rear end of the cushion unit 30, and a front connection shaft 35 extends through the paired right and left supporting parts 4c'. The piston rod 30b of the cushion unit 30 has a front boss part 30d, which is rotatably supported by the front connection shaft 35 extending through the supporting parts 4c'.

The relay arm 31 is disposed in such a manner as to extend generally vertically when the motorcycle 1 is stationary. A lower pin 36 extends through a lower end part 31 a of the relay arm 31 and a lower top part 24d of the reinforcing part 24c of the left rear arm body 24, and the relay arm 31 and the rear arm body 24 are rotatably supported by the lower pin 36 extending through the lower end part 31 a and the lower top part 24d. An upper pin 37 extends through an upper end part 31 b of the relay arm 31 and a rear boss part 30e of the cylinder 30a of the cushion unit 30, and the relay arm 31 and the cushion unit 30 are rotatably supported by the upper pin 37 extending through the upper end part 31 b the rear boss part 30e. A rear connection shaft 34 extends through the intermediate portion 31 c, which is an intermediate portion in the longitudinal direction of the relay arm 31, and the rear end of the intermediate arm 32, and the relay arm 31 and the intermediate arm 32 are rotatably supported by the rear connection shaft 34 extending through the intermediate portion 31 c and the rear end of the intermediate arm 32.

The intermediate arm 32 has a pair of right and left arm parts (arm parts 38 and 39) extending from both ends of the front boss part 30d of the cushion unit 30 on the outside in the vehicle width direction to the both sides of the intermediate portion 31 c of the relay arm 31 on the outside in the vehicle width direction. The intermediate arm 32 has a plurality of connecting parts 40a to 40d connecting the arm parts 38 and 39 and covering the cushion unit 30 from below. The arm parts 38 and 39 and the connecting parts 40a to 40d of the intermediate arm 32 are integrally formed.

Front boss parts 38a and 39a are formed at the front ends of the arm parts 38 and 39, respectively, and rear boss parts 38b and 39b are formed at the rear ends of the arm parts 38 and 39, respectively. The front boss parts 38a and 39a are connected by the connecting part 40a, and rotatably supported by the front connection shaft 35, which extends through bearings 41 of the front boss parts 38a and 39a. The rear boss parts 38b and 39b are connected by the connecting part 40d, and rotatably supported by the rear connection shaft 34, which extends through bearings 42 of the rear boss parts 38b and 39b.

The connecting parts 40b and 40c between the connecting parts 40a and 40d are bulged downward more than the lower ends of the front boss parts 38a and 39a and the rear boss parts 38b and 39b. The arm parts 38 and 39 have rib parts 38c and 39c, respectively, between the connecting parts 40b and 40c.

The front boss part 38a and the rear boss part 38b of the arm part 38 are located on the side of the center line "d" of the cushion unit 30 (or the intermediate arm 32) by the width of regions S1 and S2, respectively, than the outer end (outer end 38') of that part of the arm part 38 at which the size of the intermediate arm 32 in the vehicle width direction is maximum. That is, the front boss part 38a and the rear boss part 38b are located at positions closer to the center line "c" of the vehicle than the outer ends 38'. The rear boss part 39b of the arm part 39 is located on the side of the center line "d" of the cushion unit 30 (or the intermediate arm 32) than the outer end (outer end 39') of that part of the arm part 39 at which the size of the intermediate arm 32 in the vehicle width direction is maximum. That is, the rear boss part 39b is located at a position farther from the center line "c" of the vehicle than the outer end 39'.

The center line "d" of the cushion unit 30 (or the intermediate arm 32) is located on the left side of the center line "c" of the vehicle. The upright portion 19a of the collection exhaust pipe 19 has an upstream side portion 19c, which is located on the right side of the center line "c" of the vehicle. The cushion unit 30 and the intermediate arm 32 are located slightly lower than the lower end of the engine 4. Thus, the cushion unit 30 and the intermediate arm 32 are directly exposed to head wind.

The upright portion 19a of the collection exhaust pipe 19 extends upward from below the pivot shaft 12 behind the pivot shaft 12. The cushion unit 30 is located below the pivot shaft 12 and has a longitudinally elongated shape. More specifically, the upright portion 19a and the cushion unit 30 are configured as described below.

The upright portion 19a extends upward through the arm head part space 8a surrounded by the arm head parts 24a and 25a and the cross member 26 of the rear arm 8 and the pivot shaft 12. The cushion unit 30 is disposed below the arm head part space 8a.

The cushion unit 30 is slightly inclined upward such that the rear part is located higher than the front part and has a longitudinally elongated shape. The center line "d" of the cushion unit 30 is parallel to the center line "c" of the vehicle.

The upright portion 19a is located on the right side of the center line "c" of the vehicle, and the cushion unit 30 is located on the left side of the center line "c" of the vehicle. The upstream side portion 19c of the upright portion 19a is generally aligned with the cushion unit 30.

The sub-tank 33 of the cushion unit 30 is disposed such that at least a part of the sub-tank 33 is located in the arm head part space 8a when the motorcycle 1 is stationary. The sub-tank 33 is inclined backward from bottom to top. Most part of the sub-tank 33 is covered with the left rear arm body 24 from outside in the vehicle width direction, and the sub-tank 33 is located in a position difficult to see from outside of the rear arm body 24 in the vehicle width direction (see Fig. 7). The left rear arm body 24 has an adjusting hole 24e at a position corresponding to the damping force adjusting valve 33a of the sub-tank 33, and the damping force is adjusted using the adjusting hole 24e (see Fig. 3).

The upright portion 19a is located on the front right side in the arm head part space 8a, and the sub-tank 33 is located on the rear left side in the arm head part space 8a. That is, the upright portion 19a and the sub-tank 33 are located on a diagonal line L of the arm head part space 8a.

As indicated by broken line in Fig. 5, a catalyst 43 may be accommodated in the upright portion 19a. That is, when the catalyst 43 is accommodated in the upright portion 19a disposed in the arm head part space 8a, since the upright portion 19a and the sub-tank 33 are located on a diagonal line L of the arm head part space 8a, the diameter of the upright portion 19a can be so large that a catalyst 43 with a diameter greater than that of a conventional catalyst can be accommodated in the upright portion 19a.

### (Effects of the saddle type vehicle according to the embodiment)

According to the motorcycle 1 of the embodiment, since the exhaust pipes (front and rear exhaust pipes 17 and 18) have the upright portion 19a extending upward from below the pivot shaft 12, and since the cushion unit 30 is located below the pivot shaft 12 and has a longitudinally elongated shape, the upright portion 19a of the exhaust pipes and the cushion unit 30 do not interfere with each other, and the exhaust pipes and the cushion unit 30 can be laid out easily.

Since the exhaust pipes and the cushion unit 30 can be easily laid out, the upright portion 19a of the exhaust pipes and the cushion unit 30 can be located apart from each other and the influence of heat from the exhaust pipes on the cushion unit 30 can be reduced.

Since the cylinder 30a of the cushion unit 30 is not disposed in the arm head part space 8a and the upright portion 19a is disposed in the arm head part space 8a, the exhaust pipes can be laid out easily.

Since the upright portion 19a is located on the left side of the center line "c" of the vehicle (that is, on the left side in the arm head part space 8a), and the cushion unit 30 is located on the right side of the center line "c" of the vehicle (that is, on the right side in the arm head part space 8a), and since the upstream side portion 19c, which is located on the engine side from the upright portion 19a, is aligned with the cushion unit 30, the exhaust pipes and the cushion unit 30 are easily exposed to head wind and cooling effect of the head wind can be enhanced.

Since the cylinder 30a of the cushion unit 30 is not disposed in the arm head part space 8a and the sub-tank 33 with a diameter smaller than that of the cushion unit 30 is disposed in the arm head part space 8a, the exhaust pipes and the sub-tank 33 do not interfere with each other and can be laid out easily.

Since the exhaust pipes and the sub-tank 33 can be easily laid out, the exhaust pipes and the sub-tank 33 can be located apart from each other and the influence of heat from the exhaust pipes on the sub-tank 33 can be reduced.

Since the upright portion 19a is located on the front left side in the arm head part space 8a, the upright portion 19a and the cross member 26 are less likely to interfere with each other and a sufficient space to allow the rear arm 8 to move up and down can be provided.

Since the sub-tank 33 is located on the rear right side in the arm head part space 8a, the upright portion 19a and the sub-tank 33 are less likely to interfere with each other and a sufficient space to allow the rear arm 8 to move up and down can be provided.

Since the upright portion 19a and the sub-tank 33 are located on a diagonal line L of the arm head part space 8a, the influence of heat from the upright portion 19a (exhaust pipes) on the sub-tank 33 can be further reduced.

Since the sub-tank 33 is disposed such that it is inclined backward from bottom to top when the motorcycle 1 is stationary, the sub-tank 33 and the body frame does not interfere with each other even when the cushion unit 30 is moved up about the front connection shaft 35.

Since the upright portion 19a does not interfere with the cushion unit 30, the diameter of the upright portion 19a can be so large that a catalyst 43 with a diameter greater than that of a conventional catalyst can be accommodated in the upright portion 19a.

Since the arm parts 38 and 39 of the intermediate arm 32 cover part of the cushion unit 30 from outside in the vehicle width direction, heat from the exhaust pipes can be blocked by the arm part 39.

Since the arm parts 38 and 39 are connected by the connecting parts 40a to 40d, the intermediate arm 32 has sufficient torsional rigidity to resist the torsional force generated by the expansion and contraction of the cushion unit 30.

Since the connecting parts 40a to 40d cover the cushion unit 30 from below, the cushion unit 30 can be protected from stones thrown upon it when the motorcycle 1 is running.

Since the front boss part 38a, which comes closest to the road surface when the motorcycle 1 turns, is located on the side of the center line "d" of the intermediate arm 32 (that is, inside in the vehicle width direction) than the outer end 38' of that part of the arm part 38 at which the size of the intermediate arm 32 in the vehicle width direction is maximum, the motorcycle 1 can take a sufficient bank angle.

The bushes 3c' are attached to the rear arm supporting parts 3c constituting a part of the body frame, and pivot parts 24b and 25b are provided on the arm head parts 24a and 25a, respectively. The pivot shaft 12 is fastened by the nut 12a after being inserted into the bushes 3c' and the pivot parts 24b and 25b. Thus, the arm head parts 24a and 25a can be tightly fixed by the pivot shaft 12. That is, by making the pivot shaft 12 serve as a bolt, the paired right and left arm supporting parts 3c can be joined together.

Since the paired right and left rear arm supporting parts 3c are disposed between the arm head parts 24a and 25a, the size of the arm head part space 8a can be large in the vehicle width direction. Thus, the diameter of the upright portion 19a can be so large that a catalyst 43 with a diameter greater than that of a conventional catalyst can be accommodated in the upright portion 19a. Also, a sufficient space to allow the rear arm 8 to move up and down can be provided.

According to the description above, there is provided a first embodiment of a saddle type vehicle having: a body frame (body frame 3); an engine (engine 4) mounted on the body frame; exhaust pipes (front and rear exhaust pipes 17 and 18) extending backward from the engine, a rear arm (rear arm 8) swingable about a pivot shaft (pivot shaft 12) attached to the body frame; a rear wheel (rear wheel 7) supported by a rear part of the rear arm; and a cushion unit (cushion unit 30) connecting the body frame and the rear arm; wherein the exhaust pipes have an upright portion (upright portion 19a) extending upward from below the pivot shaft, and wherein the cushion unit is located below the pivot shaft and has a longitudinally elongated shape.

According to the first embodiment, since the exhaust pipes have an upright portion extending upward from below the pivot shaft, and since the cushion unit is located below the pivot shaft and has a longitudinally elongated shape, the exhaust pipes and the cushion unit do not interfere with each other and can be laid out easily

Since the exhaust pipes and the cushion unit can be easily laid out, the upright portion of the exhaust pipes and the cushion unit can be located apart from each other and the influence of heat from the exhaust pipes on the cushion unit can be reduced.

According to a second embodiment, the rear arm has: a pair of right and left rear arm bodies (rear arm bodies 24 and 25); and a cross member (cross member 26) connecting the paired right and left rear arm bodies, the paired right and left rear arm bodies having a pair of right and left arm head parts (arm head parts 24a and 25a) located in front of the cross member, the upright portion extends upward through an arm head space (arm head part space 8a) defined by the paired right and left arm head parts, the cross member and the pivot shaft, and the cushion unit is disposed below the arm head space.

According to a third embodiment, the cushion unit has a sub-tank (sub-tank 33) for storing high-pressure gas for pressurizing operation oil, and the sub-tank is located in the arm head space when the saddle type vehicle is stationary.

According to a fourth embodiment, the upright portion is located in one side part of the arm head space, which is a part of the arm head space on the outside in the vehicle width direction, the cushion unit is located below the other side part of the arm head space, which is a part of the arm head space on the outside in the vehicle width direction, and that part of the exhaust pipe on the engine side from the upright portion (upstream side portion 19c) is aligned with the cushion unit.

According to a fifth embodiment, the upright portion is located on the front side in the one side part of the arm head space when the saddle type vehicle is stationary, and the sub-tank is located on the rear side in the other side part of the arm head space when the saddle type vehicle is stationary.

According to a sixth embodiment, the sub-tank is inclined backward from bottom to top when the saddle type vehicle is stationary.

According to a seventh embodiment, a catalyst (catalyst 43) is disposed in the upright portion.

According to an eighth embodiment, the saddle type vehicle further has: a relay arm (relay arm 31) connecting a rear part of the cushion unit and the rear arm; and an intermediate arm (intermediate arm 32) connecting the body frame and the relay arm at a position below the cushion unit, the intermediate arm having a pair of right and left arm parts (arm parts 38 and 39) covering at least a part of the cushion unit from outside in the vehicle width direction, and a connecting parts (connecting parts 40a to 40d) connecting the paired right and left arm parts and covering the cushion unit from below.

According to a ninth embodiment, the upright portion is located in one side part of the arm head space, which is a part of the arm head space on the outside in the vehicle width direction, and the cushion unit and the intermediate arm are located below the other side part of the arm head space, which is a part of the arm head space on the outside in the vehicle width direction.

According to a tenth embodiment, the intermediate arm has a connecting boss part (front boss part 38a) connecting the body frame and the relay arm, and the connecting boss part is located inside an outer end of the intermediate arm in the vehicle width direction.

According to an eleventh embodiment, the rear arm has a pair of right and left rear arm bodies (rear arm bodies 24 and 25), the paired right and left rear arm bodies having a pair of right and left arm head parts (arm head parts 24a and 25a) having rear arm side shaft supporting parts (pivot parts 24b and 25b) for receiving the pivot shaft, the body frame has a pair of right and left rear arm supporting parts (rear arm supporting parts 3c) for supporting the engine disposed between the paired right and left arm head parts, the paired right and left rear arm supporting parts having body frame side shaft supporting parts (bushes 3c') for receiving the pivot shaft, and the pivot shaft extends through the rear arm side shaft supporting parts and the frame side shaft supporting parts and is fastened from outside of the rear arm side shaft supporting parts in the vehicle width direction by a fastening member (nut 12a).

According to a twelfth embodiment, the rear arm has a cross member connecting the paired right and left rear arm bodies, and the upright portion is located in an arm head space defined by the paired right and left rear arm supporting parts, the paired right and left arm head parts, the cross member and the pivot shaft when the saddle type vehicle is stationary.

According to a thirteenth embodiment, there is disclosed a method, in a saddle type vehicle having: an engine; a body frame supporting the engine and having a pair of right and left rear arm supporting parts having body frame side shaft supporting parts for receiving a pivot shaft; a rear arm having a pair of right and left arm head parts having rear arm side shaft receiving parts for receiving the pivot shaft; and a rear wheel supported by a rear part of the rear arm, for attaching the rear arm to the body frame, the method includes the steps of: bringing the paired right and left rear arm supporting parts into contact with each other; placing the paired right and left rear arm supporting parts between the paired right and left arm head parts; inserting the pivot shaft through the body frame side shaft supporting parts and the rear arm side shaft supporting parts; and fastening the pivot shaft from outside of the rear arm side shaft supporting parts in the vehicle width direction with a fastening member.

According to the present embodiments discussed above, there is provide a saddle type vehicle in which the exhaust pipe and cushion unit can be laid out easily even when the exhaust pipe extends upward behind the pivot shaft, and a method for attaching a rear arm.

Namely, according to a preferred embodiment, in order to provide a saddle type vehicle in which an exhaust pipe and a cushion unit can be laid out easily even when the exhaust pipe extends upward behind the pivot shaft, and a method for attaching a rear arm, there is provided a motorcycle 1 having: a body frame 3; an engine 4 mounted on the body frame 3; front and rear exhaust pipes 17 and 18 extending backward from the engine 4; a rear arm 8 swingable about a pivot shaft 12 attached to the body frame 3; a rear wheel 7 supported by a rear part of the rear arm 8; and a cushion unit 30 connecting the body frame 3 and the rear arm 8, the exhaust pipes 17 and 18 have an upright portion 19a extending upward from below the pivot shaft 12, and the cushion unit 30 is located below the pivot shaft 12 and has a longitudinally elongated shape.

## Claims

1. Saddle type vehicle comprising a body frame (3), an engine (4) mounted on the body frame (3), an exhaust pipe (17,18) extending backward from the engine (4), a rear arm (8) swingable about a pivot shaft (12) attached to the body frame (3), a rear wheel (7) supported by a rear part of the rear arm (8), and a cushion unit (30) connecting the body frame (3) and the rear arm (8), wherein the exhaust pipe (17,18,19) has an upright portion (19a) extending upward from below the pivot shaft (12), and wherein the cushion unit (30) is located below the pivot shaft (12) and has a longitudinally elongated shape, wherein the rear arm (8) is provided with an arm head space (8a), and wherein the upright portion (19a) is located in one side part of the arm head space (8a), which is a part of the arm head space (8a) on the outside in the vehicle width direction, and the cushion unit (30) is located below the other side part of the arm head space (8a), which is a part of the arm head space (8a) on the outside in the vehicle width direction.

2. Saddle-type vehicle according to claim 1, **characterized by** a front exhaust pipe (17) connected to a front exhaust port (4e') of the engine (4), and a rear exhaust pipe (18) connected to a rear exhaust port (18), said front and rear exhaust pipes (17,18) being joined to form a collection exhaust pipe (19) having the upright portion (19a).

3. Saddle-type vehicle according to claim 1 or 2, **characterized in that** the rear arm (8) has a pair of right and left rear arm bodies (24,25) and a cross member (26) connecting the paired right and left rear arm bodies (24,25), the paired right and left rear arm bodies (24,25) having a pair of right and left arm head parts (24a,25a) located in front of the cross member (26), said paired right and left arm head parts (24a,25a), said cross member (26) and said pivot shaft (12) defining the arm head space (8a).

4. Saddle-type vehicle according to claim 3, **characterized in that** the upright portion (19a) extends upward through the arm head space (8a) defined by the paired right and left arm head parts (24a,25a), the cross member (26) and the pivot shaft (12), and **in that** the cushion unit (30) is disposed below the arm head space (8a).

5. Saddle-type vehicle according to claim 3 or 4, **characterized in that** the cushion unit (30) has a sub-tank (33) for storing high-pressure gas for pressurizing operation oil, wherein the sub-tank (33) is located in the arm head space (8a) when the saddle type vehicle is stationary.

6. Saddle-type vehicle according to claim 5, **characterized in that** the sub-tank (33) is inclined backward from bottom to top when the saddle-type vehicle is stationary.

7. Saddle-type vehicle according to one of the claims 2 to 6, **characterized in that** the upright portion (19a) is located in one side part of the arm head space (18a), which is a part of the arm head space (8a) on the outside in the vehicle width direction, **in that** the cushion unit (30) is located below the other side part of the arm head space (8a), which is a part of the arm head space (8a) on the outside in the vehicle width direction, and **in that** part of the exhaust pipe (17,18,19) on the engine side from the upright portion (19a) is aligned with the cushion unit (30).

8. Saddle-type vehicle according to claim 7, **characterized in that** the upright portion (19a) is located on the front side in the one side part of the arm head space (8a) when the saddle-type vehicle is stationary, and **in that** the sub-tank (30) is located on the rear side in the other side part of the arm head space (8a) when the saddle-type vehicle is stationary.

9. Saddle-type vehicle according to one of the claims 1 to 8, **characterized by** a catalyst disposed in the upright portion (19a).

10. Saddle-type vehicle according to one of the claim 1 to 9, **characterized by** a relay arm (31) connecting a rear part of the cushion unit (30) and the rear arm (8), and by an intermediate arm (32) connecting the body frame (3) and the relay arm (31) at a position below the cushion unit (30), the intermediate arm (32) having a pair of right and left arm parts (38,39) covering at least a part of the cushion unit (30) from outside in the vehicle width direction, and having a connecting part (40a to 40d) connecting the paired right and left arm parts (38,39) and covering the cushion unit (30) from below.

11. Saddle-type vehicle according to claim 8, **characterized in that** the upright portion (19a) is located in one side part of the arm head space (8a), which is a part of the arm head space (8a) on the outside in the vehicle width direction, and **in that** the cushion unit (30) and the intermediate arm (32) are located below the other side part of the arm head space (8a), which is a part of the arm head space (8a) on the outside in the vehicle width direction.

12. Saddle-type vehicle according to claim 10 or 11, **characterized in that** the intermediate arm (32) has a connecting boss part (38a,39a) connecting the body frame (3) and the relay arm (31), wherein the connecting boss part (38a,39a) is located inside an outer end of the intermediate arm (32) in the vehicle width direction.

13. Saddle-type vehicle according to claim 1, **characterized in that** the rear arm (8) has a pair of right and left rear arm bodies (24,25), the paired left and right rear arm bodies (24,25) having a pair of right and left arm head parts (24a,25a) having rear arm side shaft supporting parts (24b,25b) for receiving the pivot shaft (12), **in that** the body frame (3) has a pair of right and left rear arm supporting parts (3c) for supporting the engine (4) disposed between the paired right and left arm head parts (24a,25a), the paired right and left rear arm supporting parts (3c) having body frame side shaft supporting parts (3c') for receiving the pivot shaft (12), and **in that** the pivot shaft (12) extends through the rear arm side shaft supporting parts (24b,25b) and the frame side shaft supporting parts (3c') and is fastened from outside of the rear arm side shaft supporting parts (3c) in the vehicle width direction by a fastening member (12a).

14. Saddle-type vehicle according to claim 13, **characterized in that** the rear arm (8) has a cross member (26) connecting the paired right and left rear arm bodies (24,25), and **in that** the upright portion (19a) is located in an arm head space (8a) defined by the paired right and left rear arm supporting parts (3c), the paired right and left arm head parts (24a,25a), the cross member (26) and the pivot shaft (12) when the saddle type vehicle is stationary.

## Patentansprüche

1. Fahrzeug vom Sattel- Typ, aufweisend einen Karosserierahmen (3), einen Motor (4), montiert an dem Karosserierahmen (3), ein Abgasrohr (17, 18), das sich von dem Motor (4) nach hinten erstreckt, einen hinteren Arm (8), schwenkbar um eine Schwenkwelle (12), verbunden mit dem Karosserierahmen (3), ein Hinterrad (7), gelagert durch einen hinteren Teil des hinteren Arms (8), und eine Dämpfereinheit (30), die den Karosserierahmen (3) und den hinteren Arm (8) verbindet, wobei das Abgasrohr (17, 18, 19) einen aufrechten Abschnitt (19a) hat, der sich von unten der Schwenkwelle (12) nach oben erstreckt, und wobei die Dämpfereinheit (30) unter der Schwenkwelle (12) angeordnet ist und in Längsrichtung eine langgestreckte Form hat, wobei der hintere Arm (8) mit einem Armkopfraum (8a) versehen ist, und wobei der aufrechte Abschnitt (19a) in einem Seitenteil des Armkopfraumes (8a), der ein Teil des Armkopfraumes (8a) an der Außenseite in Richtung der Breite des Fahrzeuges ist, angeordnet ist, und die Dämpfereinheit (30) unter dem anderen Seitenteil des Armkopfraumes (8a) angeordnet ist, der ein Teil des Armkopfraumes (8a) an der Außenseite in Richtung der Breite des Fahrzeuges ist.

2. Fahrzeug vom Sattel- Typ nach Anspruch 1, **gekennzeichnet durch** ein vorderes Abgasrohr (17), verbunden mit einer vorderen Abgasöffnung (4e') des Motors (4), und einem hinteren Abgasrohr (18), verbunden mit einer hinteren Abgasöffnung (18), wobei das vordere und das hintere Abgasrohr (17, 18) verbunden sind, um ein Sammelabgasrohr (19) mit dem aufrechten Abschnitt (19a) zu bilden.

3. Fahrzeug vom Sattel- Typ nach Anspruch 1 oder 2, **dadurch gekennzeichnet, dass** der hintere Arm (8) ein Paar von linken und rechten Armkörpem (24, 25) und ein Querteil (26) hat, das die paarweisen rechten und linken Armkörper (24, 25) verbindet, wobei die paarweisen rechten und linken Armkörper (24, 25) ein Paar von rechten und linken Armkopfteilen (24a, 25a), angeordnet vor dem Querteil (26), haben, wobei die die paarweisen rechten und linken Armkopfteile (24a, 25a), das Querteil (26) und die Schwenkwelle (12) den Armkopfraum (8a) bilden.

4. Fahrzeug vom Sattel- Typ nach Anspruch 3, **dadurch gekennzeichnet, dass** sich der aufrechte Abschnitt nach oben durch den Armkopfraum (8a) erstreckt, gebildet durch die paarweisen rechten und linken Armkopfteile (24a, 25a), das Querteil (26) und die Schwenkwelle (12), und dadurch, dass die Dämpfereinheit (30) unter dem Armkopfraum (8a) angeordnet ist.

5. Fahrzeug vom Sattel- Typ nach Anspruch 3 oder 4, **dadurch gekennzeichnet, dass** die Dämpfereinheit (30) einen Sub- Tank (33) zum Speichern von Hochdruckgas zum Unterdrucksetzen von Betriebsöl hat, wobei der Sub- Tank (33) in dem Armkopfraum (8a) angeordnet ist, wenn das Fahrzeug vom Sattel- Typ stationär ist.

6. Fahrzeug vom Sattel- Typ nach Anspruch 5, **dadurch gekennzeichnet, dass** der Sub- Tank (33) nach hinten von unten nach oben geneigt ist, wenn das Fahrzeug vom Sattel- Typ stationär ist.

7. Fahrzeug vom Sattel- Typ nach einem der Ansprüche 2 bis 6, **dadurch gekennzeichnet, dass** der aufrechte Abschnitt (19a) in einem Seitenteil des Armkopfraums (18a) angeordnet ist, der ein Teil des Armkopfraums (8a) an der Außenseite des Fahrzeuges in Richtung der Breite des Fahrzeuges ist, dadurch, dass die Dämpfereinheit (30) unter dem anderen Seitenteil des Armkopfraums (8a) angeordnet ist, der ein Teil des Armkopfraums (8a) an der Außenseite in der Richtung der Breite des Fahrzeuges ist, und dadurch, dass ein Teil des Abgasrohres (17, 18, 19) auf der Motorseite des aufrechten Abschnittes (19a) mit der Dämpfereinheit (30) ausgerichtet ist.

8. Fahrzeug vom Sattel- Typ nach Anspruch 7, **dadurch gekennzeichnet, dass** der aufrechte Abschnitt (19a) auf der Vorderseite in dem einen Seitenteil des Armkopfraums (8a) angeordnet bist, wenn das Fahrzeug vom Sattel- Typ stationär ist, und dadurch, dass der Sub- Tank (30) auf der rechten Seite des anderen Seitenteils des Armkopfraums (8a) angeordnet ist, wenn das Fahrzeug vom Sattel- Typ stationär ist.

9. Fahrzeug vom Sattel- Typ nach einem der Ansprüche 1 bis 8, **gekennzeichnet durch** einen Katalysator, angeordnet in dem aufrechten Abschnitt (19a).

10. Fahrzeug vom Sattel- Typ nach einem der Ansprüche 1 bis 9, **gekennzeichnet durch** einen Relaisarm (31), der einen hinteren Teil der Dämpfereinheit (30) und den hinteren Arm (8) verbindet, und **durch** einen Zwischenarm (32), der den Karosserierahmen (3) und den Relaisarm (31) an einer Position unter der Dämpfereinheit (30) verbindet, wobei der Zwischenarm (32) ein Paar von rechten und linken Armteilen (38, 39) hat, die zumindest einen Teil der Dämpfereinheit (30) von außen in der Richtung der Breite des Fahrzeuges abdecken, und einen Verbindungsteil (40a bis 40d) hat, das die paarweisen rechten und linken Armteile (38, 39) verbindet und die Dämpfereinheit (30) von unten abdeckt.

11. Fahrzeug vom Sattel- Typ nach Anspruch 8, **dadurch gekennzeichnet, dass** der aufrechte Abschnitt (19a) in einem Seitenteil des Armkopfraumes (8a) angeordnet ist, der ein Teil des Armkopfraumes (8a) auf der Außenseite in der Richtung der Breite des Fahrzeuges ist, und dadurch, dass die Dämpfereinheit (30) und der Zwischenarm (32) unter dem anderen Seitenteil des Armkopfraums (8a) angeordnet sind, der ein Teil des Armkopfraumes (8a) auf der Außenseite in der Richtung der Breite des Fahrzeuges ist.

12. Fahrzeug vom Sattel- Typ nach Anspruch 10 oder 11, **dadurch gekennzeichnet, dass** der Zwischenarm (32) ein Verbindungsnabenteil (38a, 39a) hat, der den Karosserierahmen (3) und den Relaisarm (31) verbindet, wobei das Verbindungsnabenteil (38a, 39a) innen eines äußeren Endes des Zwischenarms (32) in der Richtung der Breite des Fahrzeuges angeordnet ist.

13. Fahrzeug vom Sattel- Typ nach Anspruch 1, **dadurch gekennzeichnet, dass** der hintere Arm (8) ein Paar von rechten und linken Armkörpem (24, 25) hat, wobei die paarweisen linken und rechten Armkörper (24, 25) ein Paar von rechten und linken Armkopfteilen (24a, 25a) haben, die die hinterarmseitigen Wellenlagerungsteile (24b, 25b) zum Aufnehmen der Schwenkwelle (12) haben, dadurch, dass der Karosserierahmen (3) ein Paar von rechten und linken hinter Arm- Lagerungsteilen (3c) zum Lagern des Motors (4) hat, angeordnet zwischen den paarweisen rechten und linken Kopfteilen (24a, 25a), wobei die paarweisen rechten und linken hinter Arm- Lagerungsteile (3c) karosserierahmenseitige Lagerungsteile (3') zur Aufnahme der Schwenkwelle (12) haben und dadurch, dass sich die Schwenkwelle (12) durch die hinterarmseitigen Wellenlagerungsteile (24b, 25b) und die rahmenseitigen Wellenlagerungsteile (3c') erstreckt und von außerhalb der hinterarmseitigen- Wellenlagerungsteile (3c) in Richtung der Breite des Fahrzeuges befestigt ist.

14. Fahrzeug vom Sattel- Typ nach Anspruch 13, **dadurch gekennzeichnet, dass** der hintere Arm (8) ein Querteil (26) hat, das die paarweisen rechten und linken hinteren Armkörper (24, 25) verbindet und dadurch, dass der aufrechte Abschnitt (19a) in einem Armkopfraum (8a) angeordnet ist, gebildet durch die paarweisen rechten und linken hinteren Arm- Lagerungsteile (3c), die paarweisen rechten und linken Armkopfteile (24a, 25a), das Querteil (26) und die Schwenkwelle (12), wenn das Fahrzeug vom Sattel- Typ stationär ist.

## Revendications

1. Véhicule du type à selle comprenant une ossature de caisse (3), un moteur (4) monté sur l'ossature de caisse (3), un tuyau d'échappement (17, 18) s'étendant vers l'arrière depuis le moteur (4), un bras arrière (8) pouvant osciller autour d'un arbre pivotant (12) fixé à l'ossature de caisse (3), une roue arrière (7) supportée par une partie arrière du bras arrière (8), et une unité d'amortissement (30) connectant l'ossature de caisse (3) et le bras arrière (8), dans lequel le tuyau d'échappement (17, 18, 19) présente une partie verticale (19a) s'étendant vers le haut depuis le dessous de l'arbre pivotant (12), et dans lequel l'unité d'amortissement (30) est positionnée au-dessus de l'arbre pivotant (12) et présente une forme longitudinalement allongée, dans lequel le bras arrière (8) est pourvu d'un espace de tête de bras (8a), et dans lequel la partie verticale (19a) est positionnée dans une partie latérale de l'espace de tête de bras (8a), qui est une partie de l'espace de tête de bras (8a) sur le côté extérieur dans la direction en largeur du véhicule, et l'unité d'amortissement (30) est positionnée au-dessous de l'autre partie latérale de l'espace de tête de bras (8a), qui est une partie de l'espace de tête de bras (8a) sur le côté extérieur dans la direction en largeur du véhicule.

2. Véhicule du type à selle selon la revendication 1, **caractérisé par** un tuyau d'échappement avant (17) connecté à un orifice d'échappement avant (4e') du moteur (4), et un tuyau d'échappement arrière (18) connecté à un orifice d'échappement arrière (18), lesdits tuyaux d'échappement avant et arrière (17, 18) étant reliés pour former un tuyau d'échappement collecteur (19) présentant la partie verticale (19a).

3. Véhicule du type à selle selon la revendication 1 ou 2, **caractérisé en ce que** le bras arrière (8) présente une paire de corps de bras arrière droit et gauche (24, 25) et une traverse (26) connectant la paire de corps de bras arrière droit et gauche (24, 25), la paire de corps de bras arrière droit et gauche (24, 25) présentant une paire de parties de tête de bras droite et gauche (24a, 25a) positionnées devant la traverse (26), ladite paire de parties de tête de bras droite et gauche (24a, 25a), ladite traverse (26) et ledit arbre pivotant (12) définissant l'espace de tête de bras (8a).

4. Véhicule du type à selle selon la revendication 3, **caractérisé en ce que** la partie verticale (19a) s'étend vers le haut à travers l'espace de tête de bras (8a) défini par la paire de parties de tête de bras droite et gauche (24a, 25a), la traverse (26) et l'arbre pivotant (12), et **en ce que** l'unité d'amortissement (30) est disposée au-dessous de l'espace de tête de bras (8a).

5. Véhicule du type à selle selon la revendication 3 ou 4, **caractérisé en ce que** l'unité d'amortissement (30) présente un réservoir secondaire (33) destiné à stocker le gaz haute pression destiné à mettre sous pression l'huile de fonctionnement, dans lequel le réservoir secondaire (33) est positionné dans l'espace de tête de bras (8a) lorsque le véhicule du type à selle est stationnaire.

6. Véhicule du type à selle selon la revendication 5, **caractérisé en ce que** le réservoir secondaire (33) est incliné vers l'arrière de bas en haut lorsque le véhicule du type à selle est stationnaire.

7. Véhicule du type à selle selon l'une quelconque des revendications 2 à 6, **caractérisé en ce que** la partie verticale (19a) est positionnée dans une partie latérale de l'espace de tête de bras (18a), qui est une partie de l'espace de tête de bras (8a) sur le côté extérieur dans la direction en largeur du véhicule, **en ce que** l'unité d'amortissement (30) est positionnée au-dessous de l'autre partie latérale de l'espace de tête de bras (8a), qui est une partie de l'espace de tête de bras (8a) sur le côté extérieur dans la direction en largeur du véhicule, et **en ce qu'**une partie du tuyau d'échappement (17, 18, 19) sur le côté du moteur depuis la partie verticale (19a) est alignée sur l'unité d'amortissement (30).

8. Véhicule du type à selle selon la revendication 7, **caractérisé en ce que** la partie verticale (19a) est positionnée sur le côté avant dans la partie latérale de l'espace de tête de bras (8a) lorsque le véhicule du type à selle est stationnaire, et **en ce que** le réservoir secondaire (30) est positionné sur le côté arrière dans l'autre partie latérale de l'espace de tête de bras (8a) lorsque le véhicule du type à selle est stationnaire.

9. Véhicule du type à selle selon l'une quelconque des revendications 1 à 8, **caractérisé par** un catalyseur disposé dans la partie verticale (19a).

10. Véhicule du type à selle selon l'une quelconque des revendications 1 à 9, **caractérisé par** un bras de relais (31) connectant une partie arrière (30) et le bras arrière (8), et par un bras intermédiaire (32) connectant l'ossature de caisse (3) et le bras de relais (31) dans une position située sous l'unité d'amortissement (30), le bras intermédiaire (32) présentant une paire de parties de bras droite et gauche (38, 39) recouvrant au moins une partie de l'unité d'amortissement (30) depuis l'extérieur dans la direction en largeur du véhicule, et présentant une partie de connexion (40a à 40d) connectant la paire de parties de bras droite et gauche (38, 39) et recouvrant l'unité d'amortissement (30) du dessous.

11. Véhicule du type à selle selon la revendication 8, **caractérisé en ce que** la partie verticale (19a) est positionnée dans une partie latérale de l'espace de tête de bras (8a), qui est une partie de l'espace de tête de bras (8a) sur le côté extérieur dans la direction en largeur du véhicule, et **en ce que** l'unité d'amortissement (30) et le bras intermédiaire (32) sont positionnés au-dessous de l'autre partie latérale de l'espace de tête de bras (8a), qui est une partie de l'espace de tête de bras (8a) sur le côté extérieur dans la direction en largeur du véhicule.

12. Véhicule du type à selle selon la revendication 10 ou 11, **caractérisé en ce que** le bras intermédiaire (32) présente une partie de bossage de connexion (38a, 39a) connectant l'ossature de caisse (3) et le bras de relais (31), dans lequel la partie de bossage de connexion (38a, 39a) est positionnée à l'intérieur d'une extrémité externe du bras intermédiaire (32) dans la direction en largeur du véhicule.

13. Véhicule du type à selle selon la revendication 1, **caractérisé en ce que** le bras arrière (8) présente une paire de corps de bras arrière droit et gauche (24, 25), la paire de corps de bras arrière gauche et droit (24, 25) présentant une paire de parties de tête de bras droit et gauche (24a, 25a) présentant des parties de support d'arbre côté bras arrière (24b, 25b) destinées à recevoir l'arbre pivotant (12), **en ce que** l'ossature de caisse (3) présente une paire de parties de support de bras arrière droite et gauche (3c) destinées à supporter le moteur (4) disposé entre la paire de parties de tête de bras droite et gauche (24a, 25a), la paire de parties de support de bras arrière droit et gauche (3c) présentant des parties de support d'arbre côté ossature de caisse (3c') destinées à recevoir l'arbre pivotant (12), et **en ce que** l'arbre pivotant (12) s'étend à travers les parties de support d'arbre côté bras arrière (24b, 25b) et les parties de support d'arbre côté cadre (3c') et est fixé depuis l'extérieur des parties de support d'arbre côté bras arrière (3c) dans la direction en largeur du véhicule par un élément de fixation (12a).

14. Véhicule du type à selle selon la revendication 13, **caractérisé en ce que** le bras arrière (8) présente une traverse (26) connectant la paire de corps de bras arrière droit et gauche (24, 25), et **en ce que** la partie verticale (19a) est positionnée dans un espace de tête de bras (8a) défini par la paire de parties de support de bras arrière droite et gauche (3c), la paire de parties de tête de bras droite et gauche (24a, 25a), la traverse (26) et l'arbre pivotant (12) lorsque le véhicule du type à selle est stationnaire.
